# FASCICULE DE BREVET EUROPEEN

(11) **EP 2 867 545 B1**
(45) Date de publication et mention de la délivrance du brevet: **17.08.2016**
(21) Numéro de dépôt: 13744640.7
(22) Date de dépôt: 26.06.2013
(51) Int. Cl.: F16B 13/06

(54) **CHEVILLE A EXPANSION**
SPREIZDÜBEL
EXPANSION ANCHOR

(30) Priorité: 28.06.2012 FR 1256150
(43) Date de publication de la demande: 06.05.2015
(73) Titulaire: Saint-Gobain Placo, 92150 Suresnes (FR)
(72) Inventeur: VIVIER, Guillaume, F-92200 Bagneux (FR); OBAME OBAME, Hugues, F-60180 Nogent Sur Oise (FR)
(74) Mandataire: Bregal, Laurence
(86) Numéro de dépôt international: PCT/FR2013/051496
(87) Numéro de publication internationale: WO 2014/001721

(56) Documents cités:
- GB-A- 704 510
- US-A- 2 918 841
- US-A- 3 017 800
- US-A- 4 617 692

## Description

La présente invention a trait à une cheville à expansion pour la fixation dans une paroi, et à l'utilisation d'une telle cheville.

Il est connu de fixer une pièce sur une paroi d'épaisseur relativement faible, telle qu'une plaque de plâtre, à l'aide d'une cheville à expansion comprenant une vis et un corps de cheville déformable. Sous l'effet d'un vissage de la vis dans une partie taraudée du corps de cheville, ou par l'utilisation d'un outil spécifique, le corps de cheville se déforme depuis un état initial d'insertion dans la paroi vers un état déployé dans la paroi ou à l'arrière de la paroi. Dans son état déployé, le corps de cheville assure l'ancrage de la vis par rapport à la paroi.

Il existe plusieurs types de chevilles à expansion connus qui diffèrent par la structure de leur corps de cheville.

Dans un premier type de cheville connu, le corps de cheville comporte une pluralité de pattes métalliques allongées, qui sont réparties circonférentiellement autour de la tige de vis. Ces pattes métalliques sont prévues pour plier et se rabattre contre la face arrière de la paroi, en étant réparties en étoile. Le contact entre les pattes métalliques du corps de cheville et la face arrière de la paroi, qui est généralement constituée en un matériau moins rigide, tend à fragiliser la paroi, ce qui pénalise la tenue à l'arrachement de la cheville. La tenue à l'arrachement de ce type de cheville est également limitée par la surface des pattes métalliques.

Un autre type de cheville connu, tel que décrit dans US 2 918 841 A, comprend un corps de cheville tubulaire en matériau plastique comportant une pluralité de fentes longitudinales réparties circonférentiellement. Ces fentes définissent une pluralité de bandes, qui sont déformables hélicoïdalement lors du vissage de la vis dans une partie taraudée du corps. Les bandes déformées hélicoïdalement viennent au contact de la face arrière de la paroi dans des zones de plis saillantes. Du fait de la rigidité du matériau plastique constitutif du corps, ces zones de plis saillantes provoquent une indentation et une fragilisation de la paroi, qui tend à diminuer la tenue à l'arrachement de la cheville. De plus, les bandes déformées hélicoïdalement forment un disque de support de charge à l'arrière de la paroi. Or, avec une telle géométrie, il existe un risque d'extrusion de la partie taraudée du corps à travers l'orifice de la paroi lorsqu'un effort d'arrachement est appliqué du côté de la tête de vis, ce qui limite également la tenue à l'arrachement de la cheville.

C'est à ces inconvénients qu'entend plus particulièrement remédier l'invention en proposant une cheville à expansion pour la fixation dans une paroi, notamment dans une plaque de plâtre, qui présente une tenue à l'arrachement améliorée par rapport aux chevilles de l'état de la technique.

A cet effet, l'invention a pour objet une cheville à expansion pour la fixation dans une paroi, comprenant une vis ayant une tête et une tige munie d'un filet, et un corps de cheville propre à recevoir la tige de la vis, le corps de cheville comportant :
- une collerette destinée à être dirigée vers la tête de la vis,
- une partie formant écrou apte à coopérer avec le filet de la vis,
- une partie d'expansion déformable entre la collerette et la partie formant écrou,
la partie formant écrou étant apte à avancer en direction de la collerette, en déformant la partie d'expansion depuis un état initial d'insertion dans une paroi vers un état déployé, sous l'action d'un vissage de la vis dans la partie formant écrou,
caractérisée en ce que la partie d'expansion comprend une membrane en matériau polymère, qui comporte un alésage interne de réception de la tige de la vis, chacune des surfaces périphériques interne et externe de la membrane étant munie d'une pluralité de rainures longitudinales réparties circonférentiellement et ouvertes radialement, qui augmentent la surface circonférentielle de la membrane, et en ce qu'en configuration montée de la cheville dans un orifice d'une paroi, avec la collerette en appui contre une première face de la paroi et la partie d'expansion qui débouche d'une deuxième face de la paroi, la partie d'expansion à l'état déployé forme une surface de contact continue en regard de la deuxième face de la paroi et a une section de support de charge, transversalement à l'axe de la vis, qui est globalement décroissante depuis la surface de contact vers la partie formant écrou.

Au sens de l'invention, on entend par section de support de charge globalement décroissante le fait que la section de support de charge :
- soit est continûment décroissante depuis la surface de contact vers la partie formant écrou,
- soit comporte au moins deux bourrelets superposés, la section transversale maximale d'un bourrelet étant supérieure à la section transversale maximale du bourrelet suivant en allant de la surface de contact vers la partie formant écrou.

Grâce à l'invention, le volume disponible du corps de cheville est exploité de manière optimale pour porter la charge à l'état déployé de la partie d'expansion. En effet, grâce à la membrane en matériau polymère, la partie d'expansion à l'état déployé forme une surface de contact continue en regard de la face arrière de la paroi, ce qui garantit une surface importante de reprise de charge. En particulier, vis-à-vis de la cheville à pattes métalliques de l'état de la technique qui présente une surface de contact discrète à l'arrière de la paroi, la cheville selon l'invention permet, pour un même rayon de la surface de contact, d'augmenter l'aire de contact, ce qui diminue les contraintes de cisaillement vues par la paroi. De manière avantageuse, la membrane est relativement rigide de façon à assurer une bonne reprise de charge, tout en ayant un contact doux avec la paroi. Les rainures longitudinales permettent d'obtenir un niveau élevé de déformation, et donc une expansion suffisante, de la membrane. On note également qu'avec la cheville conforme à l'invention, par rapport à la cheville à pattes métalliques, il n'est pas nécessaire d'avoir des rayons aussi importants de la surface de contact pour atteindre un même niveau d'abaissement des contraintes, car le gain en aire de contact compense la diminution du rayon de la surface de contact. D'autre part, la section de support de charge de la partie d'expansion à l'état déployé a une forme globalement tronconique entre la surface de contact et la partie formant écrou, où la grande base du cône est définie par la surface de contact. Cette géométrie tronconique à section globalement décroissante à partir de la surface de contact est optimale pour rediriger la charge vue par la surface de la paroi vers la partie formant écrou. Ceci a pour effet une réponse plus raide du corps de cheville, qui permet d'éviter l'extrusion de la partie formant écrou à travers l'orifice de la paroi, liée à un fléchissement du disque de support de charge.

Selon une caractéristique avantageuse, la section de support de charge de la partie d'expansion à l'état déployé est centrée sur l'axe de la vis. Une telle configuration assure une bonne répartition de la charge, ce qui améliore la tenue à l'arrachement de la cheville.

De manière avantageuse, la cheville comprend des moyens de guidage de la déformation de la partie d'expansion depuis l'état initial vers l'état déployé, qui assurent que la section de support de charge de la partie d'expansion à l'état déployé est globalement décroissante depuis la surface de contact vers la partie formant écrou.

Dans un mode de réalisation de l'invention, les moyens de guidage de la déformation de la partie d'expansion comprennent au moins deux zones de jonction circonférentielles dans lesquelles au moins certaines rainures longitudinales de la membrane sont fermées, la dimension longitudinale de chaque tronçon défini entre deux zones de jonction successives étant décroissante depuis la collerette vers la partie formant écrou. Cet agencement permet de guider la formation de bourrelets successifs de la membrane au cours de la déformation de la partie d'expansion, où les bourrelets sont à section transversale décroissante en allant de la surface de contact vers la partie formant écrou grâce à la dimension longitudinale décroissante des tronçon définis entre les zones de jonction.

Dans un autre mode de réalisation de l'invention, les moyens de guidage de la déformation de la partie d'expansion comprennent un périmètre de la membrane décroissant depuis la collerette vers la partie formant écrou. La déformation de la membrane est d'autant plus importante que son périmètre interne et/ou externe est grand. Dès lors, la structure de la membrane avec un périmètre décroissant en direction de la partie formant écrou guide, au cours de la déformation de la partie d'expansion, la formation d'un profil de la membrane à section transversale décroissante en allant de la surface de contact vers la partie formant écrou.

De préférence, la membrane est constituée en un matériau élastomère ayant un comportement raidissant quand sa déformation augmente. Ainsi, on réalise un compromis entre, d'une part, une déformabilité élevée de la membrane lorsque la partie d'expansion passe de l'état initial d'insertion à l'état déployé et, d'autre part, une contribution élevée de la membrane au support de charge à l'état déployé de la partie d'expansion.

De manière avantageuse, la partie d'expansion comprend un habillage déformable positionné autour de la membrane de manière à guider ou confiner la déformation de la membrane, cet habillage étant lié à la partie formant écrou. A titre d'exemple, l'habillage déformable peut se présenter sous une forme analogue à un corps de cheville à pattes métalliques de l'état de la technique, la membrane étant alors insérée à l'intérieur de ce corps. A l'état déployé de la partie d'expansion, la membrane vient ainsi remplir l'espace libre entre les pattes métalliques en regard de la face arrière de la paroi, ce qui augmente la tenue à l'arrachement de la cheville par rapport au cas où seules les pattes métalliques assurent la reprise de charge.

Selon une caractéristique avantageuse, les moyens de guidage de la déformation de la partie d'expansion comprennent des motifs longitudinaux de l'habillage, propres à guider la déformation de l'habillage de sorte qu'il s'évase à partir de la partie formant écrou.

Selon une autre caractéristique avantageuse, les moyens de guidage de la déformation de la partie d'expansion comprennent deux zones de pliage circonférentielles de l'habillage qui délimitent en elles une portion d'appui contre la deuxième face de la paroi à l'état déployé de la partie d'expansion.

Selon une caractéristique, l'habillage est en matériau métallique.

Dans un mode de réalisation, la partie formant écrou est une portion de la membrane qui est taraudable par la vis. En variante, la partie formant écrou peut être un élément rapporté, solidaire de la partie d'expansion.

Selon un aspect de l'invention, la partie d'expansion du corps de cheville et la partie formant écrou sont solidarisés l'un avec l'autre par sertissage.

Selon une caractéristique, la cheville comprend des moyens de blocage en rotation du corps de cheville par rapport à la paroi en position d'appui de la collerette contre la paroi ou contre une pièce à fixer sur la paroi.

Dans un mode de réalisation, le corps de cheville comporte un élément de perçage à son extrémité opposée à la collerette. La cheville est alors autoforeuse. Elle permet de fixer une pièce sur une paroi sans avoir à percer au préalable un orifice dans la paroi, simplement en entraînant la vis de la cheville en rotation à l'aide d'un outil de vissage classique. Afin de permettre le perçage puis la déformation de la partie d'expansion par entraînement en rotation de la vis, la cheville comprend des moyens de solidarisation entre la vis et le corps de cheville qui sont détachables pour un couple, appliqué entre la vis et le corps de cheville, supérieur ou égal à un couple prédéterminé. Le couple prédéterminé doit notamment être supérieur au couple nécessaire pour percer la paroi et inférieur au couple pour lequel les moyens de blocage en rotation du corps de cheville par rapport à la paroi n'assurent plus leur fonction.

L'invention a également pour objet l'utilisation d'une cheville telle que décrite ci-dessus pour la fixation dans une paroi de faible épaisseur, notamment un panneau de construction, tel qu'une plaque de plâtre, y compris une plaque de plâtre renforcée par des fibres ou munie de voiles de fibres, en particulier de fibres de verre (glass mat) ; une plaque ciment ; un panneau en aggloméré ; un panneau en bois ; une brique creuse. De tels panneaux de construction peuvent être associés avec un panneau isolant, en particulier l'invention peut être mise en oeuvre pour la fixation dans un panneau composite formé, à titre d'exemple, par l'assemblage d'une plaque de plâtre et d'un panneau en polystyrène expansé, ou par l'assemblage d'une plaque de plâtre et d'un panneau de mousse polyuréthane.

En particulier, un objet de l'invention est l'utilisation d'une cheville telle que décrite ci-dessus pour la fixation dans une plaque de plâtre ayant une densité volumique de coeur inférieure à 650 kg/m³, de préférence inférieure à 550 kg/m³. Une plaque de plâtre comprend classiquement une couche de plâtre (sulfate de calcium dihydraté), appelée coeur, qui est recouverte sur chacune de ses faces principales par une feuille de carton, de papier et/ou de fibres minérales. Les feuilles sur les faces principales du coeur servent à la fois d'armature et de parement, le composite ainsi formé présentant de bonnes propriétés mécaniques. La gamme de densité volumique de coeur inférieure à 650 kg/m³, de préférence inférieure à 550 kg/m³, correspond à des plaques de plâtre ultra-allégées, pour lesquelles l'utilisation de la cheville conforme à l'invention est particulièrement avantageuse du fait de sa tenue à l'arrachement améliorée.

Enfin, l'invention a pour objet un ensemble comprenant une plaque de plâtre ayant une densité volumique de coeur inférieure à 650 kg/m³, de préférence inférieure à 550 kg/m³, et une cheville telle que décrite ci-dessus, qui est fixée ou destinée à être fixée dans la plaque de plâtre.

Les caractéristiques et avantages de l'invention apparaîtront dans la description qui va suivre de plusieurs modes de réalisation d'une cheville à expansion selon l'invention, donnée uniquement à titre d'exemple et faite en se référant aux dessins annexés dans lesquels :
- la figure 1 est une vue en perspective du corps d'une cheville conforme à un premier mode de réalisation de l'invention ;
- la figure 2 est une coupe selon le plan Il de la figure 1 en configuration montée du corps de cheville dans un orifice d'une paroi, la partie d'expansion du corps de cheville étant dans son état initial d'insertion, cette figure montrant également la vis de la cheville et une pièce à fixer sur la paroi au moyen de la cheville ;
- la figure 3 est une vue en perspective de la membrane de la partie d'expansion du corps de cheville des figures 1 et 2 ;
- la figure 4 est une coupe analogue à la figure 2, à l'état déployé de la partie d'expansion du corps de cheville, la pièce étant alors fixée sur la paroi ;
- la figure 5 est une vue analogue à la figure 3 montrant la membrane de la partie d'expansion pour une cheville conforme à un deuxième mode de réalisation de l'invention ;
- les figures 5a et 5b sont des coupes selon les flèches Va et Vb de la figure 5 ;
- la figure 5c est une coupe selon la ligne Vc-Vc de la figure 5 ;
- la figure 6 est une coupe analogue à la figure 2 pour une cheville conforme à un troisième mode de réalisation de l'invention ;
- la figure 7 est une vue en perspective de la membrane de la partie d'expansion du corps de cheville de la figure 6 ;
- la figure 8 est une vue en perspective analogue à la figure 1 du corps d'une cheville conforme à un quatrième mode de réalisation de l'invention ;
- la figure 9 est une coupe selon le plan IX de la figure 8 en configuration montée du corps de cheville dans un orifice d'une paroi, la partie d'expansion du corps de cheville étant dans son état initial d'insertion, cette figure montrant également la vis de la cheville et une pièce à fixer sur la paroi au moyen de la cheville ;
- la figure 10 est une vue en perspective de l'écrou de la cheville de la figure 9 ;
- la figure 11 est une coupe analogue à la figure 9 pour une cheville conforme à un cinquième mode de réalisation de l'invention ;
- la figure 12 est une vue en perspective de la pièce à fixer sur la paroi montrée sur la figure 11 ;
- la figure 13 est une vue en perspective de la pièce de la figure 12 en cours de fixation sur la paroi au moyen de deux chevilles telles que montrées sur la figure 11 ;
- la figure 14 est une vue selon la flèche XIV de la figure 13 ;
- la figure 15 est une vue selon la flèche XV de la figure 13 ;
- la figure 16 est une coupe analogue à la figure 2 pour une cheville conforme à un sixième mode de réalisation de l'invention ;
- la figure 17 est une vue en perspective analogue à la figure 1 du corps d'une cheville conforme à un septième mode de réalisation de l'invention ;
- la figure 18 est une coupe selon le plan XVIII de la figure 17 en configuration montée de la cheville dans un orifice d'une paroi, à l'état déployé de la partie d'expansion du corps de cheville ;
- la figure 19 est une vue en perspective de l'habillage de la partie d'expansion pour une cheville conforme à un huitième mode de réalisation de l'invention, où l'habillage est dans une configuration correspondant à l'état initial d'insertion de la partie d'expansion ; et
- la figure 20 est une vue en perspective analogue à la figure 19, où l'habillage est dans une configuration correspondant à l'état déployé de la partie d'expansion.

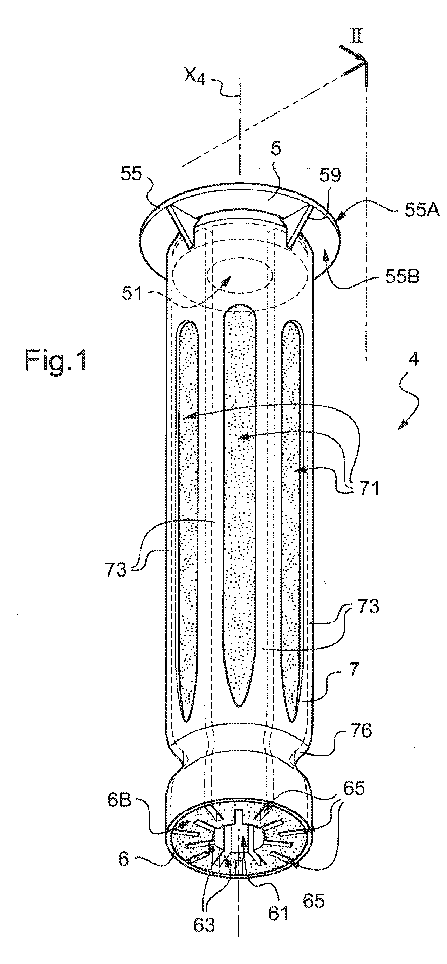

Dans le premier mode de réalisation représenté sur les figures 1 à 4, la cheville à expansion 10 conforme à l'invention est destinée à fixer une pièce sur une paroi de faible épaisseur. La cheville 10 comprend une vis 1 et un corps de cheville 4 déformable. La vis 1, dont on note X₁ l'axe longitudinal, comporte une tête 2 et une tige 3 munie d'un filet 31. Le corps de cheville 4 est de forme allongée centrée sur un axe X₄ et est propre à recevoir la tige 3 de la vis, les axes X₁ et X₄ étant alors confondus.

Comme visible sur la figure 1, le corps de cheville 4 comprend une membrane 6 de forme allongée en matériau élastomère, qui comporte un alésage interne 61 de réception de la tige 3 de la vis. L'une des extrémités 6A de la membrane 6 est en butée contre un capuchon 5 comportant un alésage central 51. L'alésage 51 est positionné dans le prolongement de l'alésage 61 de la membrane, de sorte que la tige de vis peut être reçue successivement dans les alésages 51 et 61. À son extrémité opposée à la membrane, le capuchon 5 est muni d'une collerette 55, dont une face 55A est destinée à être dirigée vers la tête 2 de la vis. Au voisinage de l'autre face 55B de la collerette 55, le capuchon comporte une série d'ailettes anti-rotation 59 réparties circonférentiellement.

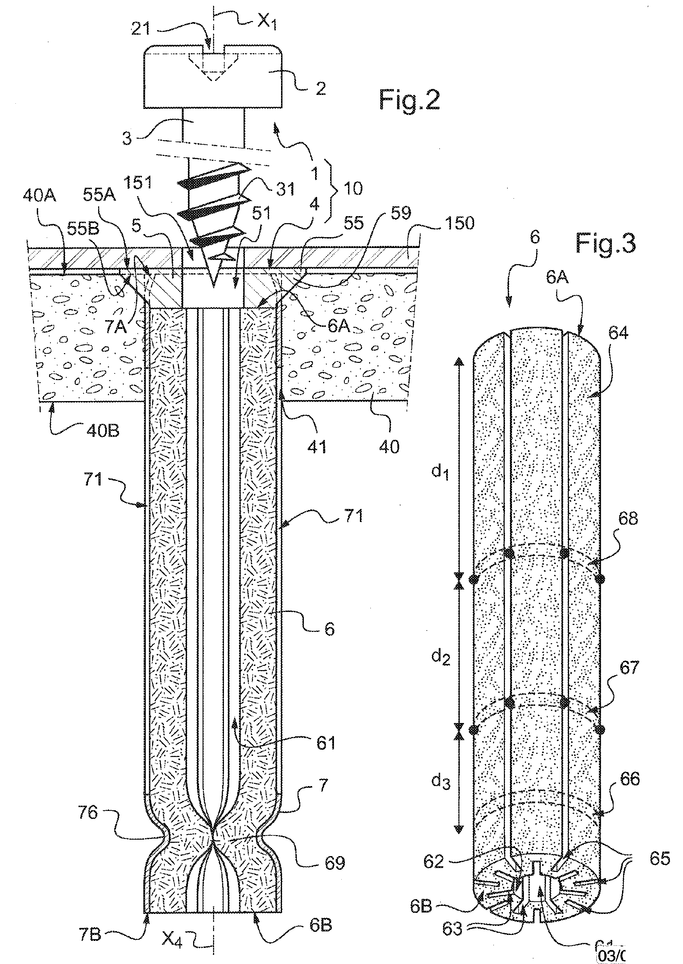

Le corps de cheville 4 comprend également un habillage externe 7 en matériau métallique, qui est positionné autour de la membrane 6 et du capuchon 5, en s'étendant depuis la face 55B de la collerette jusqu'au voisinage de l'extrémité 6B de la membrane opposée à l'extrémité 6A. L'une des extrémités 7A de l'habillage 7 est fixée par coincement contre la face 55B de la collerette 55. L'habillage 7 est également serti autour de la membrane 6, au niveau d'une portion 76 voisine de l'autre extrémité 7B de l'habillage, ce qui solidarise la membrane et l'habillage tout en immobilisant la membrane en appui contre le capuchon 5. Le sertissage de l'habillage 7 au niveau de la portion 76 crée une portion resserrée 69 de la membrane 6. Comme visible sur la figure 2, l'alésage 61 de la membrane est obturé au niveau de cette portion 69, qui forme une portion taraudable par la tige 3 de la vis.

L'habillage 7 comprend des lumières longitudinales 71 qui s'étendent parallèlement à l'axe X₄ du corps de cheville, entre la collerette 55 et la portion sertie 76. Les lumières 71 définissent entre elles des bras métalliques 73 déformables. L'habillage 7 peut être fabriqué à partir d'un flan métallique plan dans lequel les lumières 71 sont usinées, le flan métallique étant ensuite mis en forme cylindrique avec soudage de ses deux extrémités de manière à former l'habillage 7 tubulaire. En variante, l'habillage 7 peut être obtenu à partir d'un tube métallique dans lequel les lumières 71 sont découpées. L'habillage 7 peut être constitué en tout matériau métallique, notamment en acier.

Dans ce premier mode de réalisation, la membrane 6 est tubulaire, avec une section transversale constante sur toute sa longueur. Plus précisément, la membrane 6 présente une forme de tube cylindrique à section circulaire, où chacune des surfaces périphériques interne 62 et externe 64 du tube est munie d'une pluralité de rainures réparties circonférentiellement. Comme bien visible sur la figure 3, les rainures 63 de la surface interne 62 sont ouvertes radialement vers l'alésage central 61 du tube, tandis que les rainures 65 de la surface externe 64 sont ouvertes radialement vers l'extérieur du tube. La présence des rainures 63 et 65 augmente la surface circonférentielle de la membrane 6, et donc sa déformabilité. De manière avantageuse, la membrane 6 du premier mode de réalisation est fabriquée par extrusion. De préférence, la membrane 6 est constituée en un matériau élastomère ayant un comportement raidissant quand sa déformation augmente, notamment en terpolymère éthylène-propylène-diène (EPDM) ou en caoutchouc vulcanisé additionné de noir de carbone.

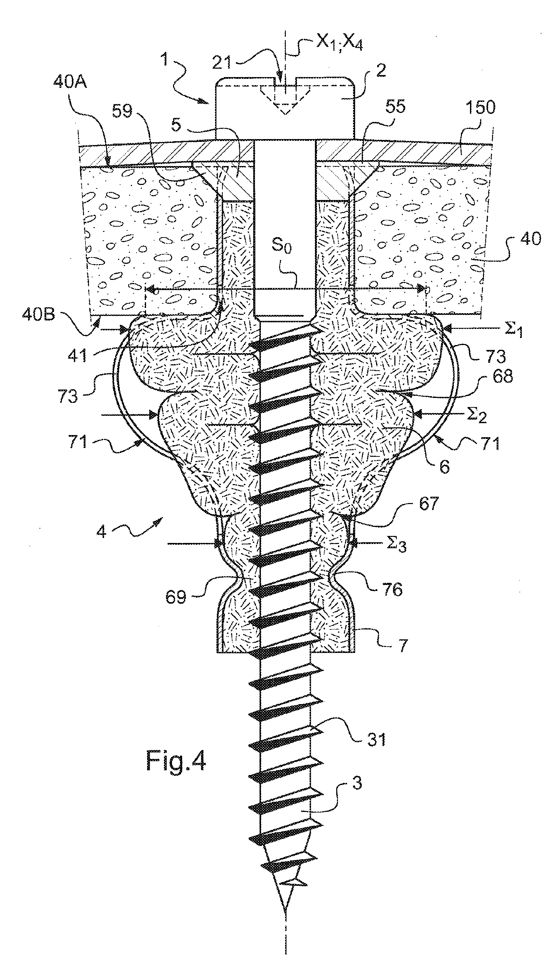

Grâce à leurs matériaux constitutifs et leurs géométries, la membrane 6 et l'habillage 7 sont aptes, lorsqu'un effort de rapprochement est exercé sur les portions serties 76 et 69 en direction de la collerette 55, à se déformer radialement vers l'extérieur. La membrane 6 et l'habillage 7 forment ainsi la partie d'expansion de la cheville 10, qui est déformable depuis un état initial d'insertion dans une paroi, visible sur la figure 2, vers un état déployé, visible sur la figure 4.

Afin de guider la déformation de la partie d'expansion, la membrane 6 comprend deux séries de point de jonction, qui définissent deux zones de jonction circonférentielles 67 et 68 dans lesquelles les rainures externes 65 de la membrane sont fermées. À l'état assemblé du corps de cheville 4, les rainures externes 65 de la membrane sont fermées également dans une troisième zone de jonction circonférentielle 66, correspondant à la zone de sertissage de l'habillage 7. En vue d'obtenir un niveau de déformation de la membrane 6 globalement décroissant, depuis l'extrémité 6A vers la zone de sertissage 66, les zones de jonction circonférentielles 66, 67 et 68 sont agencées de telle sorte que la longueur de chaque tronçon de membrane défini entre deux zones de jonction successives est décroissante depuis l'extrémité 6A vers la zone de sertissage 66. Ainsi, comme montré sur la figure 3, la longueur d₁ du tronçon de membrane défini entre l'extrémité 6A et la zone de jonction circonférentielle 68 est supérieure à la longueur d₂ du tronçon de membrane défini entre les zones de jonction circonférentielles 68 et 67, qui est elle-même supérieure à la longueur d₃ du tronçon de membrane défini entre la zone de jonction circonférentielle 67 et la zone de sertissage 66.

La fixation d'une pièce 150 sur une paroi 40 au moyen de la cheville 10 s'opère de la manière décrite ci-dessous, en référence aux figures 2 et 4. À titre d'exemple non limitatif, la paroi 40 sur laquelle on souhaite fixer la pièce 150 est une plaque de plâtre.

Tout d'abord, on perce un orifice 41 dans la paroi 40 et on y insère le corps de cheville 4, dont la partie d'expansion 6, 7 est dans son état initial d'insertion, jusqu'à ce que la face 55B de la collerette 55 vienne en appui contre la face avant 40A de la paroi. Dans cette configuration, la partie d'expansion formée par la membrane 6 et l'habillage 7 débouche de la face arrière 40B de la paroi, comme visible sur la figure 2. De plus, les ailettes anti-rotation 59 sont en prise dans le matériau de la paroi 40 au voisinage de la face avant 40A, de sorte que le corps de cheville 4 est immobilisé en rotation par rapport à la paroi.

On positionne ensuite la pièce 150 à fixer sur la paroi 40 contre la face 40A de la paroi et la face 55A de la collerette, un orifice 151 de la pièce étant aligné avec les alésages 51 et 61 du corps de cheville 4. On engage alors la tige 3 de la vis dans l'orifice 151 de la pièce et les alésages 51 et 61, jusqu'à la venue en butée de l'extrémité de la tige 3 contre la portion taraudable 69 de la membrane 6. La vis 1 est entraînée en rotation dans le sens classique de vissage, par action d'un outil dans le logement 21 prévu à cet effet dans la tête 2 de la vis, de sorte que la portion 69 est progressivement traversée par la tige 3 de la vis, et taraudée par celle-ci. La portion 69 forme ainsi un écrou en prise avec le filet 31 de la vis.

En poursuivant l'entraînement en rotation de la vis 1 dans le sens classique de vissage, la portion 69 formant écrou remonte le long de la tige 3 de la vis en direction de la collerette 55, tout en déformant la partie d'expansion formée par la membrane 6 et l'habillage 7 depuis l'état initial d'insertion vers un état déployé visible sur la figure 4. Lorsque la partie d'expansion est à l'état déployé, la cheville 10 est fermement ancrée dans la paroi 40 et la pièce 150 est fixée sur la paroi en étant immobilisée entre la collerette 55 et la tête 2 de la vis.

A l'état déployé de la partie d'expansion, les bras 73 de l'habillage 7 sont déformés radialement vers l'extérieur et les lumières 71 sont agrandies. De plus, la membrane 6 est comprimée contre la face arrière 40B de la paroi selon un profil à trois bourrelets. Le premier bourrelet, le plus proche de la face 40B, est défini entre la face 40B et la zone de jonction 68 de la membrane et forme une surface de contact S₀ continue en regard de la face arrière 40B. Les deuxième et troisième bourrelets sont définis, respectivement, entre les deux zones de jonction 68 et 67 et entre la zone de jonction 67 et la portion 69 formant écrou. La surface de contact continue S₀ en regard de la face arrière 40B garantit une surface importante de reprise de charge. En pratique, la face arrière 40B de la paroi reçoit en appui les bras 73 déformés de l'habillage 7 et les parties de la surface S₀ de la membrane 6 qui débouchent entre les bras 73. Dans la mesure où la membrane 6 est constituée en un matériau élastomère présentant un contact doux avec la face arrière 40B de la paroi, et où l'appui de la partie d'expansion contre la paroi s'exerce principalement via la membrane et seulement marginalement via les bras 73 de l'habillage métallique, on limite la dégradation de la face arrière de la paroi. L'intégrité de la paroi 40 au contact avec la partie d'expansion est ainsi préservée, ce qui est important pour obtenir une bonne tenue à l'arrachement de la cheville 10.

Comme bien visible sur la figure 4, la partie d'expansion 6, 7 à l'état déployé a une section de support de charge, transversalement à l'axe X₁ de la vis, qui est globalement décroissante depuis la surface de contact S₀ vers la portion 69 formant écrou. En effet, c'est la membrane 6 qui supporte principalement la charge, l'habillage 7 ayant une contribution plus faible, et la section transversale maximale Σ₁ du premier bourrelet de la membrane, le plus proche de la surface de contact S₀, est supérieure à la section transversale maximale Σ₂ du deuxième bourrelet intermédiaire, qui est elle-même supérieure à la section transversale maximale Σ₃ du troisième bourrelet, le plus proche de la portion 69 formant écrou. Cette géométrie à section globalement décroissante à partir de la surface de contact S₀ permet de rediriger la charge vue par la face arrière 40B de la paroi vers la portion 69 formant écrou. De manière avantageuse, la déformation de la partie d'expansion s'opère de telle sorte que la section de support de charge est centrée sur l'axe X₁ de la vis, ce qui garantit une bonne redistribution de la charge autour de la vis.

Grâce à la surface de contact continue S₀ formée en regard de la face arrière 40B de la paroi, qui a un contact doux avec la paroi du fait du matériau élastomère constitutif de la membrane 6, les contraintes vues à l'arrière de la paroi 40 sont limitées. Ceci, combiné à la redirection de la charge vers la portion 69 formant écrou qui résulte de la forme globalement tronconique de la membrane 6 à l'état déployé de la partie d'expansion, assure une tenue à l'arrachement optimisée de la cheville 10.

Dans l'ensemble des modes de réalisation décrits ci-après, qui sont des variantes du premier mode de réalisation, les éléments analogues à ceux du premier mode de réalisation portent des références identiques.

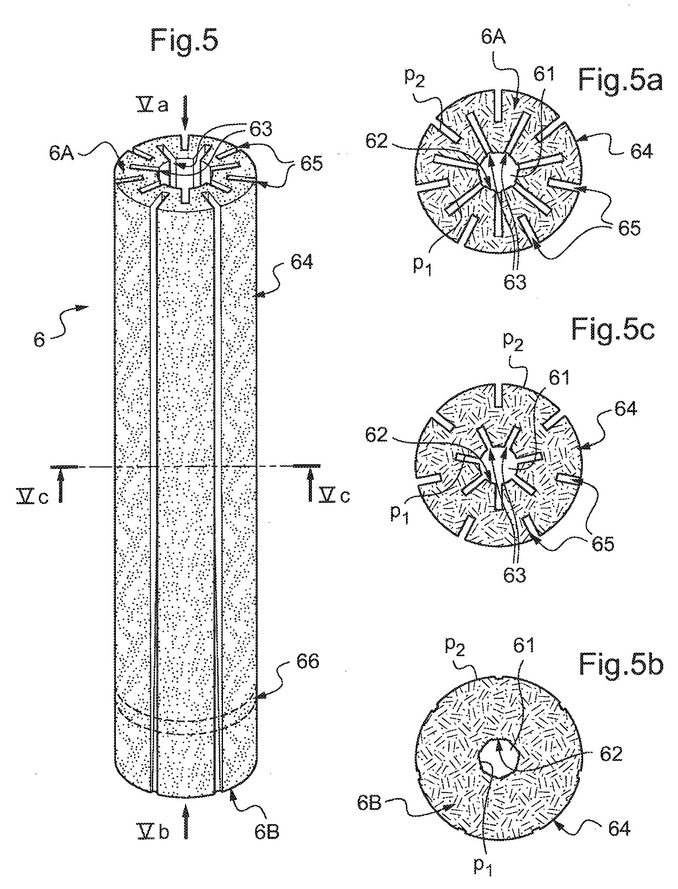

La cheville du deuxième mode de réalisation représenté sur la figure 5 diffère de celle du premier mode de réalisation uniquement par la géométrie de sa membrane 6. Comme montré sur la figure 5, la membrane 6 du deuxième mode de réalisation n'est pas à section transversale constante sur toute sa longueur car les rainures internes 63 et externes 65 de la membrane présentent un gradient d'épaisseur, selon la direction longitudinale de la membrane, qui est décroissant depuis l'extrémité 6A de la membrane vers l'extrémité 6B. Le périmètre interne p₁ de la membrane 6, incluant le contour de chaque rainure interne 63, est ainsi décroissant depuis l'extrémité 6A vers l'extrémité 6B. De la même façon, le périmètre externe p₂ de la membrane 6, incluant le contour de chaque rainure externe 65, est décroissant depuis l'extrémité 6A vers l'extrémité 6B. Cette structure particulière de la membrane 6 permet de guider la déformation de la partie d'expansion pour obtenir un niveau de déformation de la membrane 6 globalement décroissant depuis l'extrémité 6A vers la zone de sertissage 66. De manière avantageuse, la membrane 6 de ce deuxième mode de réalisation est fabriquée par moulage, notamment moulage par injection du matériau élastomère constitutif de la membrane.

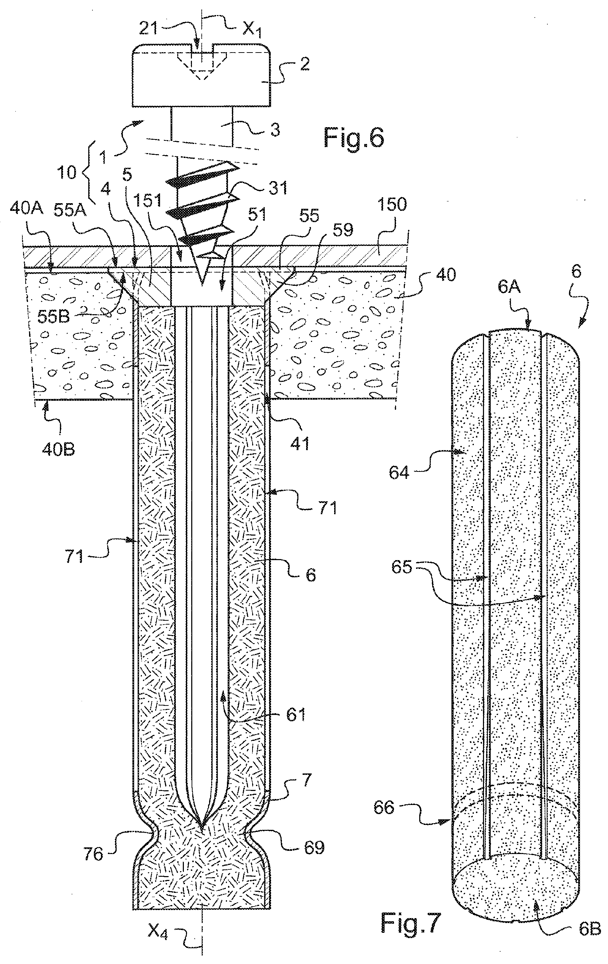

La cheville du troisième mode de réalisation représenté sur les figures 6 et 7 diffère de celle du deuxième mode de réalisation uniquement en ce que la section de la membrane 6 est pleine entre la zone de sertissage 66 et l'extrémité 6B. On augmente ainsi la surface d'interaction entre le filet 31 de la vis et la portion taraudable 69 de la membrane, ce qui contribue à rigidifier le corps de cheville 4 à l'état déployé de la partie d'expansion.

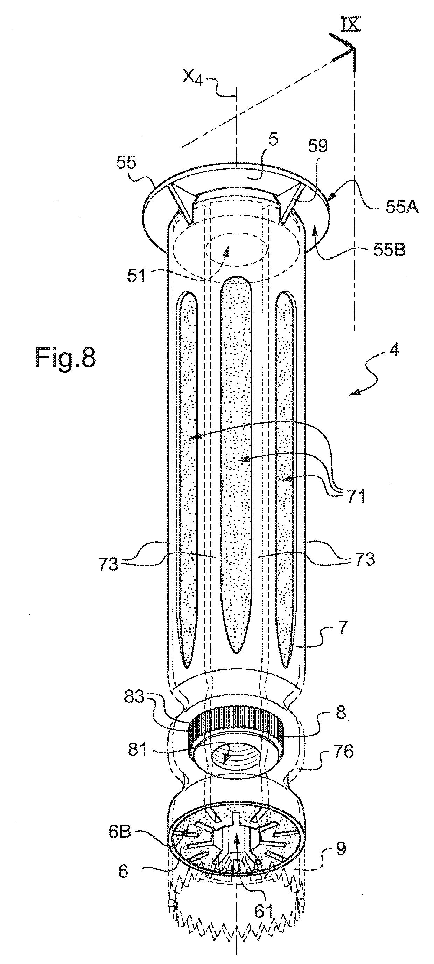

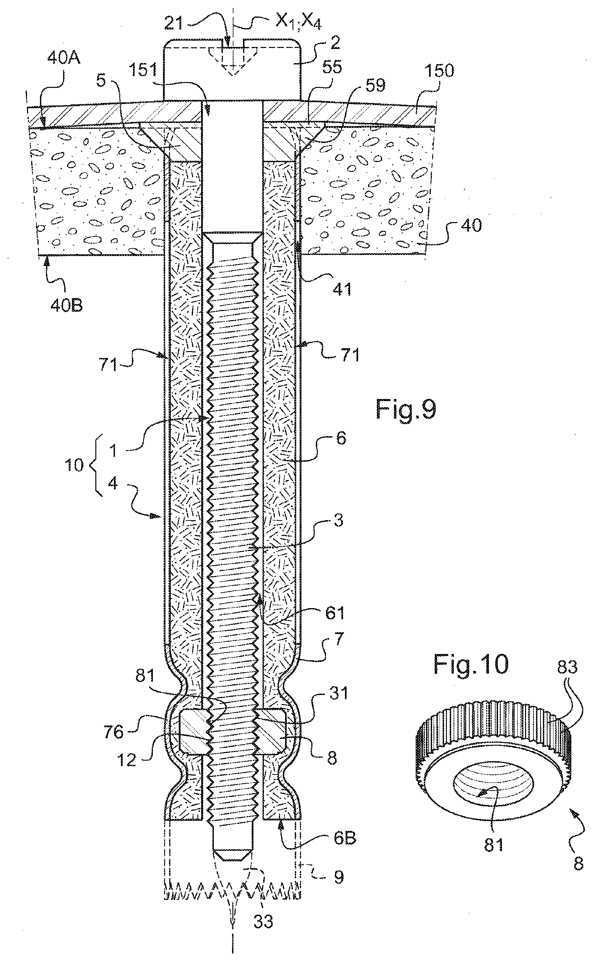

Dans le quatrième mode de réalisation représenté sur les figures 8 à 10, le corps de cheville 4 comprend un écrou métallique 8 inséré dans la membrane 6 au voisinage de l'extrémité 6B. L'écrou 8 est immobilisé par rapport à la membrane 6 et à l'habillage 7, en rotation grâce à des dentures 83 anti-rotation qui viennent en prise dans le matériau de la membrane 6 et en translation parallèlement à l'axe X₄ du corps de cheville par sertissage de l'habillage 7 autour de l'écrou. L'écrou 8 se comporte comme la portion 69 formant écrou des modes de réalisation précédents. Plus précisément, l'écrou 8 comporte un taraudage interne 81 complémentaire du filet 31 de la vis. Sous l'action d'un vissage de la vis 1, l'écrou 8 est apte à avancer en direction de la collerette 55 en déformant la partie d'expansion 6, 7 depuis un état initial d'insertion visible sur les figures 8 et 9 vers un état déployé analogue à celui montré sur la figure 4.

Dans ce quatrième mode de réalisation, le corps de cheville 4 peut comprendre en outre un élément de perçage 9 formé dans la continuité de l'habillage 7, comme montré en pointillés sur les figures 8 et 9. Dans l'exemple représenté sur les figures 8 et 9, l'élément de perçage 9 se présente sous la forme d'une scie cloche. De manière avantageuse, l'extrémité 33 de la tige 3 de la vis opposée à la tête 2 est effilée de manière à former un pointeau de centrage pour la scie cloche 9. L'élément de perçage 9 permet de rendre la cheville 10 autoforeuse. Il est ainsi possible de fixer une pièce sur une paroi à l'aide de la cheville 10 en entraînant la vis 1 en rotation à l'aide d'un outil de vissage classique, sans avoir à percer au préalable un orifice dans la paroi à l'aide d'une perceuse.

À cet effet, une couche de colle 12 est intercalée entre le taraudage 81 de l'écrou 8 et le filet 31 de la vis, de manière à solidariser la vis 1 et le corps de cheville 4 pour le perçage de la paroi. La couche de colle 12 est adaptée pour rompre lors du dépassement d'un couple prédéterminé C₀, appliqué entre la vis 1 et le corps de cheville 4, qui est ajusté en fonction des propriétés mécaniques de la paroi et des éléments constitutifs du corps de cheville. En particulier, le couple prédéterminé Co doit être supérieur au couple nécessaire pour le perçage de la paroi avec la scie cloche 9, et inférieur au couple au-delà duquel les ailettes anti-rotation 59 ne jouent plus leur rôle de blocage en rotation du corps de cheville par rapport à la paroi. Suite à la rupture de la couche de colle 12, le vissage de la vis 1 dans l'écrou 8 provoque la remontée de l'écrou le long de la tige 3 de la vis en direction de la collerette 55 et la déformation de la partie d'expansion 6,7. En variante, la solidarisation, détachable lors du dépassement d'un couple prédéterminé C₀, entre la vis 1 et le corps de cheville 4 peut être obtenue par d'autres moyens qu'une couche de colle, notamment par une liaison sécable.

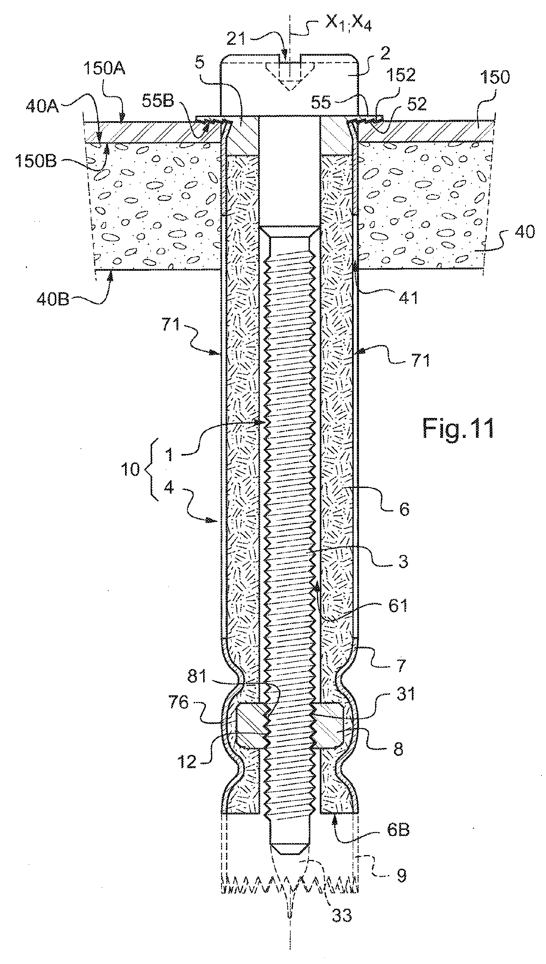

Dans le cinquième mode de réalisation représenté sur les figures 11 à 15, la cheville 10 diffère de celle du quatrième mode de réalisation uniquement en ce que les moyens de blocage en rotation du corps de cheville 4 par rapport à la paroi 40 ne sont pas des ailettes 59 d'ancrage dans le matériau de la paroi, mais des motifs en relief 52 prévus sur la face 55B de la collerette 55 dirigée à l'opposé de la tête 2 de la vis, qui sont aptes à coopérer avec des motifs en relief 152 complémentaires, prévus sur une pièce 150 à fixer sur la paroi. Dans l'exemple représenté sur les figures 11 à 15, la pièce à fixer sur la paroi 40 est une équerre 150, dont une branche 154 est destinée à venir en appui contre la paroi. La branche 154 de l'équerre 150 comprend deux orifices 151, les motifs 152 de blocage en rotation étant prévus autour de chaque orifice 151 sur une face 150A de la branche 154 destinée à être en regard de la face 55B de la collerette 55. De manière avantageuse, la branche 154 comporte, sur sa face 150B d'appui contre la paroi 40, des picots 153 d'immobilisation provisoire de l'équerre par rapport à la paroi 40. Les orifices 151 peuvent être utilisés comme éléments de centrage lors du perçage de la paroi 40 avec la scie cloche 9. Dans ce cas, il n'est pas nécessaire que l'extrémité 33 de la vis forme un pointeau de centrage.

De manière particulièrement avantageuse, la cheville 10 du cinquième mode de réalisation permet de fixer l'équerre 150 sur la paroi en une seule étape en chaque point de fixation, simplement en entraînant la vis 1 en rotation à l'aide d'un outil de vissage classique. Plus précisément, la fixation de l'équerre 150 sur la paroi 40 à l'aide de la cheville 10 s'opère en entraînant la vis 1 en rotation dans le sens classique de vissage, par action d'un outil dans le logement 21 prévu à cet effet dans la tête 2 de la vis. Dans un premier temps, le couple appliqué entre la vis 1 et le corps de cheville 4 est inférieur au couple prédéterminé C₀, de sorte que la vis et le corps de cheville sont liés cinématiquement l'un à l'autre. Par mise en rotation de la vis 1, on obtient alors une rotation de la scie cloche 9 et, en mettant en contact la scie cloche 9 avec la paroi 40 à travers un orifice 151 de la branche 154 de l'équerre, celle-ci étant immobilisée provisoirement en appui contre la paroi 40 grâce aux picots 153, on perce un trou 41 dans la paroi 40 tout en y insérant le corps de cheville 4 dont la partie d'expansion 6, 7 est dans son état initial d'insertion.

Lorsque la face 55B de la collerette 55 vient en appui contre la face 150A de la branche 154 de l'équerre, les motifs 52 de blocage en rotation prévus sur la collerette viennent en prise avec les motifs complémentaires 152 de l'équerre, de sorte que le corps de cheville 4 est immobilisé en rotation par rapport à la paroi 40. Dans cette configuration, la partie d'expansion formée par la membrane 6 et l'habillage 7 débouche de la face arrière 40B de la paroi, comme visible sur la figure 11. La vis 1 et le corps de cheville 4 restent solidaires jusqu'à ce qu'un couple supérieur ou égal au couple prédéterminé C₀ soit atteint. En continuant d'entraîner la vis 1 en rotation et donc d'augmenter le couple, la vis 1 se désolidarise du corps de cheville 4, ce qui provoque le vissage de la vis dans l'écrou 8 et l'avancée de l'écrou 8 en direction de la collerette 55. Il en résulte une déformation de la partie d'expansion formée par la membrane 6 et l'habillage 7 depuis l'état initial d'insertion vers un état déployé, ce qui verrouille la cheville 10 dans la paroi 40, la pièce 150 étant alors fixée sur la paroi en étant immobilisée entre la paroi 40 et la collerette 55.

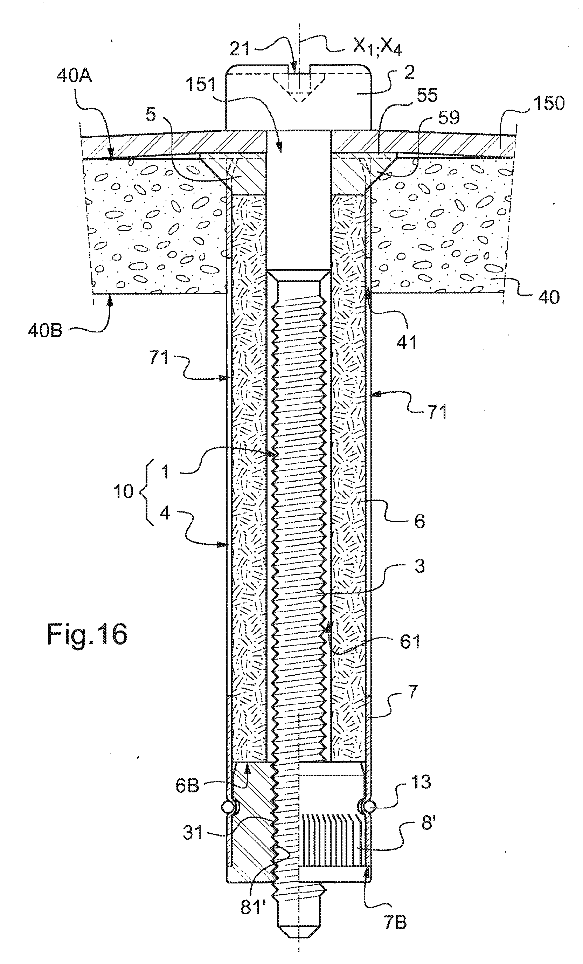

Dans le sixième mode de réalisation représenté sur la figure 16, le corps de cheville 4 comprend une colonnette métallique 8' en butée contre l'extrémité 6B de la membrane 6. La colonnette 8' est immobilisée en translation et en rotation, par rapport à la membrane 6 et à l'habillage 7, par sertissage de l'habillage 7 autour de la colonnette 8'. Un anneau de sertissage 13 est en outre prévu pour sécuriser la solidarisation de la colonnette 8' et de l'habillage 7. La colonnette 8' comporte un taraudage interne 81' complémentaire du filet 31 de la vis et est apte à avancer en direction de la collerette 55 en déformant la partie d'expansion 6, 7 sous l'action d'un vissage de la vis 1.

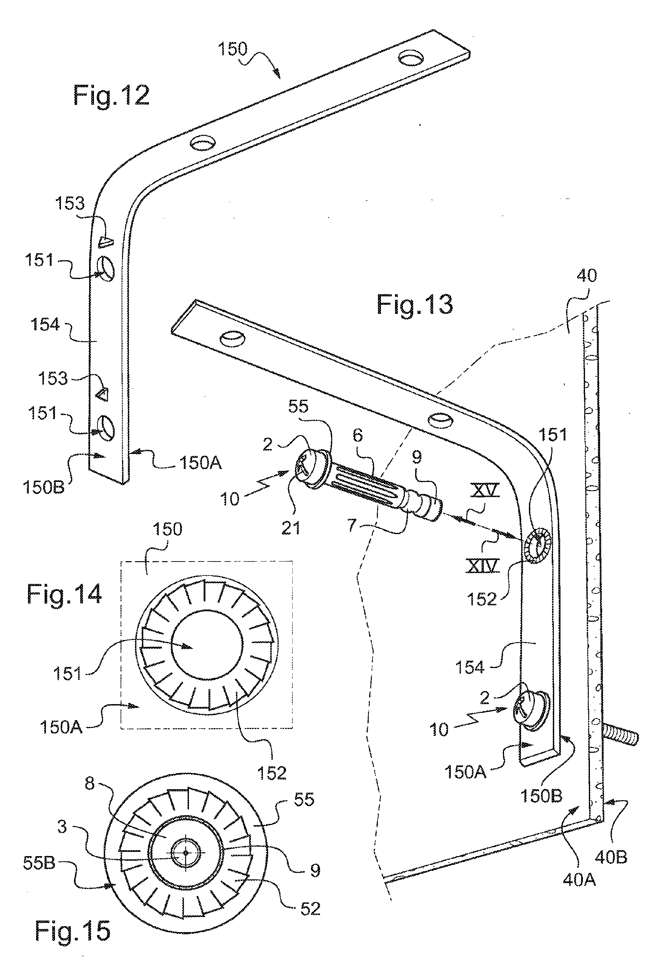

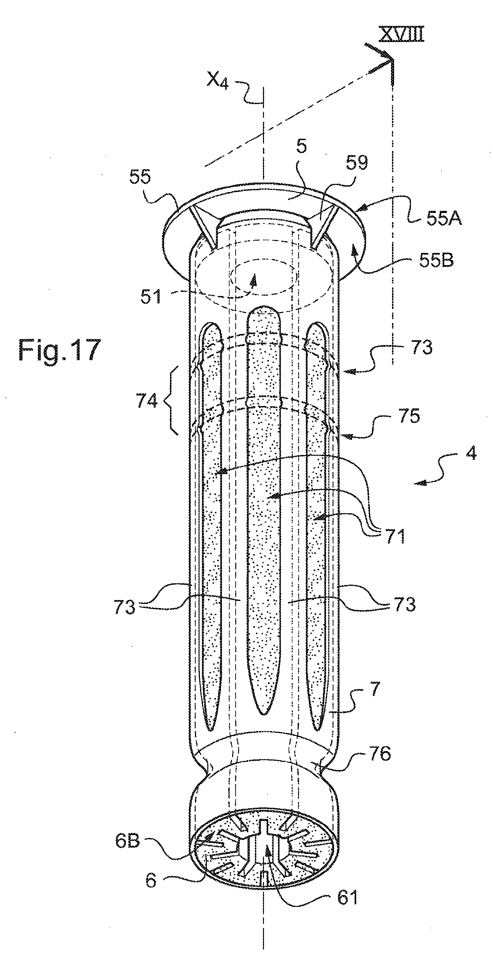

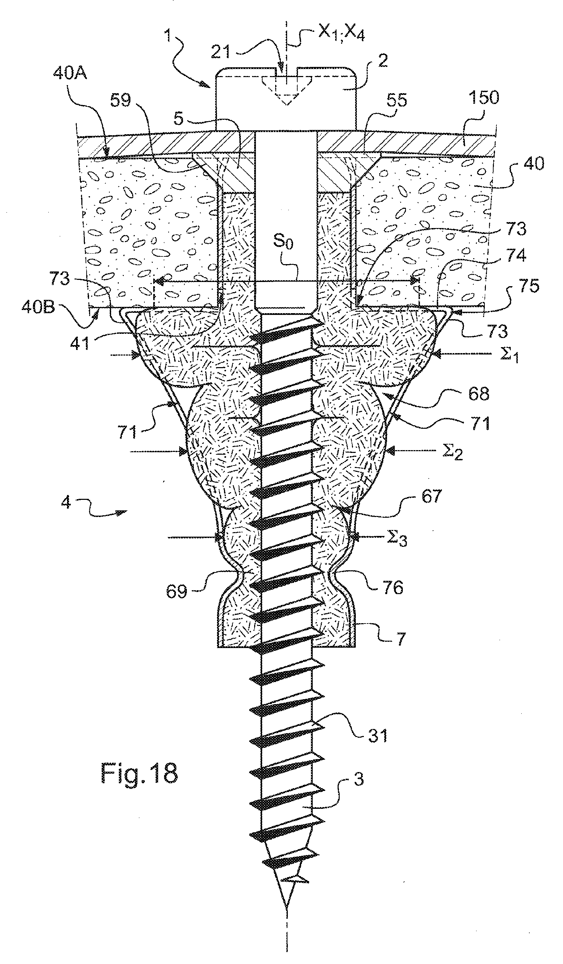

La cheville du septième mode de réalisation représenté sur les figures 17 et 18 diffère de celle du premier mode de réalisation uniquement par son habillage 7 qui comporte des amorces de pliage au niveau des lumières 71. Ces amorces de pliage sont prévues pour guider la déformation de l'habillage et définir l'aire de la surface de contact S₀. Plus précisément, comme montré sur la figure 12, l'habillage comporte deux zones de pliage circonférentielles 73 et 75, qui délimitent entre elles une portion 74 destinée à venir en appui contre la face arrière 40B de la paroi à l'état déployé de la partie d'expansion 6, 7. Ainsi, à l'état déployé montré sur la figure 18, l'habillage 7 a une forme sensiblement tronconique dont la grande base est définie par la portion 74.

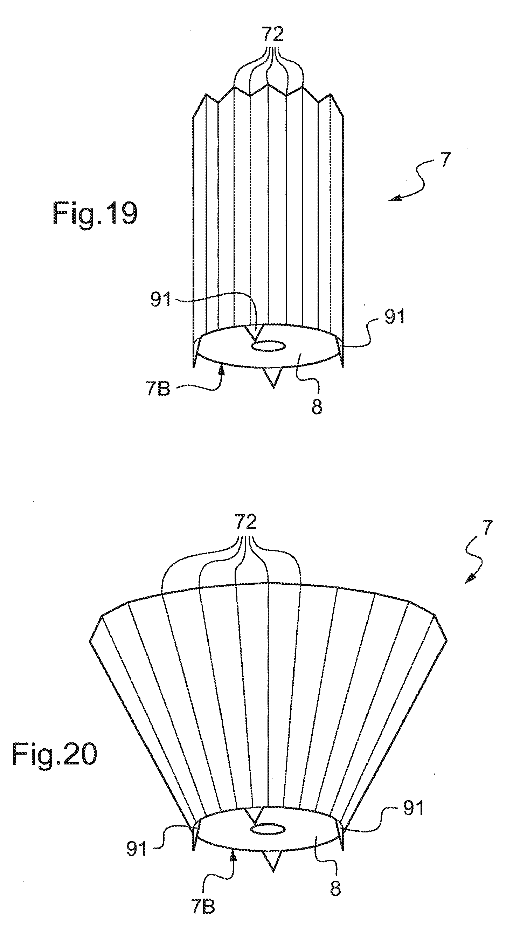

Le huitième mode de réalisation représenté sur les figures 19 et 20 illustre une variante de structure pour l'habillage 7 du corps de cheville 4. Dans ce mode de réalisation, l'extrémité 7B de l'habillage est formée par un écrou 8, à partir duquel s'étend un tube métallique dont la paroi périphérique est pliée à la manière d'un éventail selon des lignes de pliage 72. Comme montré sur la figure 20, le tube métallique est apte à s'évaser à partir de l'écrou 8 par écartement des lignes de pliage 72. Dans ce mode de réalisation, l'habillage 7 comprend également une série de dents 91 réparties circonférentiellement au niveau de l'extrémité 7B, qui permettent de rendre la cheville 10 autoforeuse, de manière analogue à la scie cloche 9 des quatrième et cinquième modes de réalisation.

L'invention n'est pas limitée aux exemples décrits et représentés. En particulier, un élément de perçage tel que décrit dans les quatrième et cinquième modes de réalisation peut être mis en place sur toute cheville conforme à l'invention, et en particulier sur les chevilles des autres modes de réalisation décrits plus haut. De plus, la partie d'expansion peut comprendre uniquement une membrane, sans que celle-ci soit associée à un habillage. L'association d'une membrane et d'un habillage est toutefois avantageuse pour multiplier les moyens de guidage de la déformation de la partie d'expansion et garantir que la section de support de charge à l'arrière de la paroi est, à l'état déployé de la partie d'expansion, globalement décroissante depuis la surface de contact en regard de la paroi vers la partie formant écrou.

## Revendications

1. Cheville à expansion (10) pour la fixation dans une paroi, comprenant :
une vis (1) ayant une tête (2) et une tige (3) munie d'un filet (31),
un corps de cheville (4) propre à recevoir la tige (3) de la vis,
le corps de cheville (4) comportant :
- une collerette (55) destinée à être dirigée vers la tête (2) de la vis,
- une partie formant écrou (69 ; 8) apte à coopérer avec le filet (31) de la vis,
- une partie d'expansion (6, 7) déformable entre la collerette et la partie formant écrou,
la partie formant écrou (69 ; 8) étant apte à avancer en direction de la collerette (55), en déformant la partie d'expansion (6, 7) depuis un état initial d'insertion dans une paroi vers un état déployé, sous l'action d'un vissage de la vis dans la partie formant écrou (69 ; 8),
**caractérisée en ce que** la partie d'expansion (6, 7) comprend une membrane (6) en matériau polymère, qui comporte un alésage interne (61) de réception de la tige (3) de la vis, chacune des surfaces périphériques interne (62) et externe (64) de la membrane (6) étant munie d'une pluralité de rainures longitudinales (63, 65) réparties circonférentiellement et ouvertes radialement, qui augmentent la surface circonférentielle de la membrane, et **en ce qu'**en configuration montée de la cheville dans un orifice (41) d'une paroi (40), avec la collerette (55) en appui contre une première face (40A) de la paroi et la partie d'expansion (6, 7) qui débouche d'une deuxième face (40B) de la paroi, la partie d'expansion à l'état déployé forme une surface de contact (S₀) continue en regard de la deuxième face (40B) et a une section (Σᵢ) de support de charge, transversalement à l'axe (X₁) de la vis (1), qui est globalement décroissante depuis la surface de contact (S₀) vers la partie formant écrou (69 ; 8).

2. Cheville selon la revendication 1, **caractérisée en ce que** la section de support de charge (Σᵢ) de la partie d'expansion (6, 7) à l'état déployé est centrée sur l'axe (X₁) de la vis (1).

3. Cheville selon l'une quelconque des revendications 1 ou 2, **caractérisée en ce qu'**elle comprend des moyens de guidage de la déformation de la partie d'expansion (6, 7) depuis l'état initial vers l'état déployé, qui assurent que la section de support de charge (Σᵢ) de la partie d'expansion à l'état déployé est globalement décroissante depuis la surface de contact (S₀) vers la partie formant écrou (69 ; 8).

4. Cheville selon l'une quelconque des revendications précédentes, **caractérisée en ce que** les moyens de guidage de la déformation de la partie d'expansion (6, 7) comprennent au moins deux zones de jonction circonférentielles (66, 67, 68) dans lesquelles au moins certaines rainures longitudinales (65) de la membrane (6) sont fermées, la dimension longitudinale (d₁, d₂, d₃) de chaque tronçon défini entre deux zones de jonction (66, 67, 68) successives étant décroissante depuis la collerette (55) vers la partie formant écrou (69 ; 8).

5. Cheville selon l'une quelconque des revendications précédentes, **caractérisée en ce que** les moyens de guidage de la déformation de la partie d'expansion (6, 7) comprennent un périmètre (p₁, p₂) de la membrane (6) décroissant depuis la collerette (55) vers la partie formant écrou (69 ; 8).

6. Cheville selon l'une quelconque des revendications précédentes, **caractérisée en ce que** la membrane (6) est en un matériau élastomère ayant un comportement raidissant quand sa déformation augmente.

7. Cheville selon l'une quelconque des revendications précédentes, **caractérisée en ce que** la partie d'expansion (6, 7) comprend un habillage (7) déformable positionné autour de la membrane (6) de manière à confiner la déformation de la membrane, cet habillage (7) étant lié à la partie formant écrou (69 ; 8).

8. Cheville selon la revendication 7, **caractérisée en ce que** les moyens de guidage de la déformation de la partie d'expansion (6, 7) comprennent des motifs longitudinaux (71 ; 72) de l'habillage (7) propres à guider la déformation de l'habillage de sorte qu'il s'évase à partir de la partie formant écrou (69 ; 8).

9. Cheville selon l'une quelconque des revendications 7 ou 8, **caractérisée en ce que** les moyens de guidage de la déformation de la partie d'expansion (6, 7) comprennent deux zones de pliage circonférentielles (73, 75) de l'habillage (7) qui délimitent en elles une portion (74) d'appui contre la deuxième face (40B) de la paroi (40) à l'état déployé de la partie d'expansion.

10. Cheville selon l'une quelconque des revendications 7 à 9, **caractérisée en ce que** l'habillage (7) est en matériau métallique.

11. Cheville selon l'une quelconque des revendications précédentes, **caractérisée en ce que** la partie formant écrou est une portion (69) de la membrane (6) qui est taraudable par la vis (1).

12. Cheville selon l'une quelconque des revendications 1 à 10, **caractérisée en ce que** la partie formant écrou est un élément rapporté (8) solidaire de la partie d'expansion (6, 7).

13. Cheville selon l'une quelconque des revendications précédentes, **caractérisée en ce que** la partie d'expansion (6, 7) et la partie formant écrou (69, 8) sont solidarisés par sertissage.

14. Cheville selon l'une quelconque des revendications précédentes, **caractérisée en ce qu'**elle comprend des moyens (59 ; 52) de blocage en rotation du corps de cheville (4) par rapport à la paroi (40) en position d'appui de la collerette (55) contre la paroi (40) ou contre une pièce (50) à fixer sur la paroi.

15. Cheville selon l'une quelconque des revendications précédentes, **caractérisée en ce que** le corps de cheville (4) comporte un élément de perçage (9 ; 91) à son extrémité opposée à la collerette (55).

16. Cheville selon la revendication 15, **caractérisée en ce que** la cheville comprend des moyens (12) de solidarisation entre la vis (1) et le corps de cheville (4) qui sont détachables pour un couple (C), appliqué entre la vis et le corps de cheville, supérieur ou égal à un couple prédéterminé (C₀).

17. Utilisation d'une cheville (10) selon l'une quelconque des revendications précédentes pour la fixation dans une paroi (40) de faible épaisseur, notamment un panneau de construction, tel qu'une plaque de plâtre, une plaque ciment, un panneau en aggloméré, un panneau en bois, une brique creuse, un panneau composite formé par l'assemblage d'une plaque de plâtre et d'un panneau isolant en polystyrène expansé ou en mousse polyuréthane.

18. Utilisation d'une cheville (10) selon l'une quelconque des revendications 1 à 16 pour la fixation dans une plaque de plâtre ayant une densité volumique de coeur inférieure à 650 kg/m³, de préférence inférieure à 550 kg/m³.

19. Ensemble comprenant une plaque de plâtre (40) ayant une densité volumique de coeur inférieure à 650 kg/m³, de préférence inférieure à 550 kg/m³, et une cheville (10) selon l'une quelconque des revendications 1 à 16 fixée ou destinée à être fixée dans la plaque de plâtre (40).

## Patentansprüche

1. Spreizdübel (10) zur Befestigung in einer Wand, umfassend:
eine Schraube (1) mit einem Kopf (2) und einem Schaft (3), der mit einem Gewinde (31) versehen ist, einem Dübelkörper (4) zum Aufnehmen des Schafts (3) der Schraube,
wobei der Dübelkörper (4) Folgendes aufweist:
- einen Bund (55), der dazu bestimmt ist, zu dem Kopf (2) der Schraube hin gerichtet zu werden,
- einen eine Mutter bildenden Teil (69; 8), der für das Zusammenwirken mit dem Gewinde (31) der Schraube eingerichtet ist,
- einen Spreizteil (6, 7), der zwischen dem Bund und dem eine Mutter bildenden Teil verformbar ist,
wobei der eine Mutter bildende Teil (69; 8) in Richtung des Bundes (55) vorschiebbar ist, indem er den Spreizteil (6, 7) unter der Einwirkung einer Verschraubung der Schraube in dem eine Mutter bildenden Teil (69; 8) aus einem anfänglichen in einer Wand eingesetzten Zustand in einen aufgespreizten Zustand verformt,
**dadurch gekennzeichnet, dass** der Spreizteil (6, 7) eine Membran (6) aus Polymermaterial umfasst, die eine innere Bohrung (61) zum Aufnehmen des Schafts (3) der Schraube aufweist, wobei jede der umlaufenden inneren Fläche (62) und äußeren Fläche (64) der Membran (6) mit einer Vielzahl von längsgerichteten Rillen (63, 65) versehen ist, die umfänglich verteilt und radial offen sind und welche die Umfangsfläche der Membran vergrößern, und dass in einer in einer Öffnung (41) einer Wand (40) montierten Ausgestaltung des Dübels, wobei sich der Bund (55) gegen eine erste Seite (40A) der Wand abstützt und der Spreizteil (6, 7) auf einer zweiten Seite (40B) der Wand herauskommt, der Spreizteil im aufgespreizten Zustand eine durchgängige Kontaktfläche (S₀) bildet, die der zweiten Seite (40B) gegenüberliegt, und einen Lastträgerquerschnitt (Σᵢ) quer zu der Achse (X₁) der Schraube (1) hat, der von der Kontaktfläche (S₀) zu dem eine Mutter bildenden Teil (69; 8) hin insgesamt abnimmt.

2. Spreizdübel nach Anspruch 1, **dadurch gekennzeichnet, dass** der Lastträgerquerschnitt (Σᵢ) des Spreizteils (6, 7) im aufgespreizten Zustand auf der Achse (X₁) der Schraube (1) zentriert ist.

3. Spreizdübel nach einem der Ansprüche 1 oder 2, **dadurch gekennzeichnet, dass** er Mittel zum Führen der Verformung des Spreizteils (6, 7) aus dem anfänglichen Zustand in den aufgespreizten Zustand umfasst, die bewirken, dass der Lastträgerquerschnitt (Σᵢ) des Spreizteils im aufgespreizten Zustand von der Kontaktfläche (S₀) zu dem eine Mutter bildenden Teil (69; 8) hin insgesamt abnimmt.

4. Spreizdübel nach einem der vorhergehenden Ansprüche, **dadurch gekennzeichnet, dass** die Mittel zum Führen der Verformung des Spreizteils (6, 7) mindestens zwei umfängliche Verbindungszonen (66, 67, 68) umfassen, in denen mindestens bestimmte längsgerichtete Nuten (65) der Membran (6) geschlossen sind, wobei das Längsmaß (d₁, d₂, d₃) jedes Abschnitts, der zwischen zwei aufeinander folgenden Verbindungszonen (66, 67, 68) definiert ist, von dem Bund (55) zu dem eine Mutter bildenden Teil (69; 8) hin abnimmt.

5. Spreizdübel nach einem der vorhergehenden Ansprüche, **dadurch gekennzeichnet, dass** die Mittel zum Führen der Verformung des Spreizteils (6, 7) einen Umfang (p₁, p₂) der Membran (6) umfassen, der von dem Bund (55) zu dem eine Mutter bildenden Teil (69; 8) hin abnimmt.

6. Spreizdübel nach einem der vorhergehenden Ansprüche, **dadurch gekennzeichnet, dass** die Membran (6) aus einem Elastomermaterial ist, das ein verstärkendes Verhalten hat, wenn seine Verformung zunimmt.

7. Spreizdübel nach einem der vorhergehenden Ansprüche, **dadurch gekennzeichnet, dass** der Spreizteil (6, 7) eine verformbare Umhüllung (7) hat, die so um die Membran (6) herum angeordnet ist, dass sie die Verformung der Membran eingrenzt, wobei diese Umhüllung (7) mit dem eine Mutter bildenden Teil (69; 8) verbunden ist.

8. Spreizdübel nach Anspruch 7, **dadurch gekennzeichnet, dass** die Mittel zum Führen der Verformung des Spreizteils (6, 7) längsgerichtete Muster (71; 72) der Umhüllung (7) umfassen zur Führung der Verformung der Umhüllung dergestalt, dass sie sich von dem eine Mutter bildenden Teil (69; 8) aus aufweitet.

9. Spreizdübel nach einem der Ansprüche 7 oder 8, **dadurch gekennzeichnet, dass** die Mittel zum Führen der Verformung des Spreizteils (6, 7) zwei umfängliche Biegezonen (73, 75) der Umhüllung (7) umfassen, die ihrerseits einen Abschnitt (74) zum Abstützen gegen die zweite Seite (40B) der Wand (40) im aufgespreizten Zustand des Spreizteils begrenzen.

10. Spreizdübel nach einem der Ansprüche 7 bis 9, **dadurch gekennzeichnet, dass** die Umhüllung (7) aus Metall ist.

11. Spreizdübel nach einem der vorhergehenden Ansprüche, **dadurch gekennzeichnet, dass** der eine Mutter bildende Teil (69) der Membran (6) durch die Schraube (1) mit Innengewinde versehen werden kann.

12. Spreizdübel nach einem der Ansprüche 1 bis 10, **dadurch gekennzeichnet, dass** der eine Mutter bildende Teil ein Ansatzelement (8) ist, das fest mit dem Spreizteil (6, 7) verbunden ist.

13. Spreizdübel nach einem der vorhergehenden Ansprüche, **dadurch gekennzeichnet, dass** der Spreizteil (6, 7) und der eine Mutter bildende Teil (69, 8) quetschverbunden sind.

14. Spreizdübel nach einem der vorhergehenden Ansprüche, **dadurch gekennzeichnet, dass** er Mittel (59; 52) umfasst, um den Dübelkörper (4) in Abstützposition des Bundes (55) gegen die Wand (40) oder gegen ein an der Wand zu befestigendes Teil (50) relativ zu der Wand (40) gegen Drehung zu sperren.

15. Spreizdübel nach einem der vorhergehenden Ansprüche, **dadurch gekennzeichnet, dass** der Dübelkörper (4) an seinem dem Bund (55) entgegengesetzten Ende ein Durchstoßelement (9; 91) aufweist.

16. Spreizdübel nach Anspruch 15, **dadurch gekennzeichnet, dass** der Dübel Mittel (12) für die feste Verbindung zwischen der Schraube (1) und dem Dübelkörper (4) umfasst, die durch ein Drehmoment (C) lösbar sind, das zwischen der Schraube und dem Dübelkörper aufgebracht wird und größer oder gleich einem vorbestimmten Drehmoment (C₀) ist.

17. Verwendung eines Dübels (10) nach einem der vorhergehenden Ansprüche zum Befestigen in einer Wand (40) geringer Dicke, insbesondere eine Bauplatte, wie eine Gipsplatte, eine Zementplatte, eine Holzfaserplatte, eine Holzplatte, ein Hohlziegel, eine Verbundstoffplatte, die durch Zusammenfügen einer Gipsplatte und einer Dämmplatte aus Polystyrolschaum oder aus Polyurethanschaum gebildet ist.

18. Verwendung eines Dübels (10) nach einem der Ansprüche 1 bis 16 zum Befestigen in einer Gipsplatte mit einer volumenbezogenen Kerndichte kleiner als 650 kg/m³, vorzugsweise kleiner als 550 kg/m³.

19. Anordnung umfassend eine Gipsplatte (40) mit einer volumenbezogenen Kerndichte kleiner als 650 kg/m³, vorzugsweise kleiner als 550 kg/m³, und einen Dübel (10) nach einem der Ansprüche 1 bis 16, der in der Gipsplatte (40) befestigt oder zur Befestigung darin bestimmt ist.

## Claims

1. Expansion anchor (10) for fixing in a wall, comprising:
a screw (1) having a head (2) and a shank (3) provided with a thread (31),
an anchor body (4) designed to receive the shank (3) of the screw,
the anchor body (4) comprising:
- a flange (55) intended to be directed towards the head (2) of the screw,
- a nut-forming portion (69; 8) designed to cooperate with the thread (31) of the screw,
- a deformable expansion portion (6, 7) between the flange and the nut-forming portion,
the nut-forming portion (69; 8) being designed to advance in the direction of the flange (55), by deforming the expansion portion (6, 7) from an initial state for insertion in a wall to a deployed state, under the action of screwing the screw in the nut-forming portion (69; 8),
**characterized in that** the expansion portion (6, 7) comprises a membrane (6) made of polymer material, having an internal bore (61) for receiving the shank (3) of the screw, each of the inner (62) and outer (64) peripheral surfaces of the membrane (6) being provided with a plurality of circumferentially distributed and radially open longitudinal grooves (63, 65) which increase the circumferential surface area of the membrane, and **in that**, in a configuration where the anchor is mounted inside a hole (41) in a wall (40), with the flange (55) bearing against a first face (40A) of the wall and the expansion portion (6, 7) projecting from a second face (40B) of the wall, the expansion portion in the deployed state forms a continuous contact surface (S₀) facing the second face (40B) of the wall and has a load-bearing section (Σᵢ), transversely with respect to the axis (X₁) of the screw (1), which is generally decreasing from the contact surface (S₀) towards the nut-forming portion (69; 8).

2. Anchor as claimed in claim 1, **characterized in that** load-bearing section (Σᵢ) of the expansion portion (6, 7) in the deployed state is centered on the axis (X₁) of the screw (1).

3. Anchor as claimed in either one of claims 1 or 2, **characterized in that** it comprises guiding means for guiding the deformation of the expansion portion (6, 7) from the initial state to the deployed state, which ensure that the load-bearing section (Σᵢ) of the expansion portion in the deployed state is generally decreasing from the contact surface (S₀) towards the nut-forming portion (69; 8).

4. Anchor as claimed in any one of the preceding claims, **characterized in that** the guiding means for guiding the deformation of the expansion portion (6, 7) comprise at least two circumferential joining zones (66, 67, 68) in which at least some longitudinal grooves (65) of the membrane (6) are closed, the longitudinal dimension (d₁, d₂, d₃) of each section defined between two successive joining zones (66, 67, 68) decreasing from the flange (55) towards the nut-forming portion (69; 8).

5. Anchor as claimed in any one of the preceding claims, **characterized in that** the guiding means for guiding the deformation of the expansion portion (6, 7) comprise a perimeter (p₁, p₂) of the membrane (6) decreasing from the flange (55) towards the nut-forming portion (69; 8).

6. Anchor as claimed in any one of the preceding claims, **characterized in that** the membrane (6) is made of an elastomeric material having a more rigid behavior when its deformation increases.

7. Anchor as claimed in any one of the preceding claims, **characterized in that** the expansion portion (6, 7) comprises a deformable casing (7) positioned around the membrane (6) so as to confine the deformation of the membrane, this casing (7) being connected to the nut-forming portion (69; 8).

8. Anchor as claimed in claim 7, **characterized in that** the guiding means for guiding the deformation of the expansion portion (6, 7) comprise longitudinal motifs (71; 72) of the casing (7) designed to guide the deformation of the casing such that it flares outwardly starting from the nut-forming portion (69; 8).

9. Anchor as claimed in either one of claims 7 or 8, **characterized in that** the guiding means for guiding the deformation of the expansion portion (6, 7) comprise two circumferential folding zones (73, 75) of the casing (7) which define between them a portion (74) for bearing against the second face (40B) of the wall (40) in the deployed state of the expansion portion.

10. Anchor as claimed in any one of claims 7 to 9, **characterized in that** the casing (7) is made of metallic material.

11. Anchor as claimed in any one of the preceding claims, **characterized in that** the nut-forming portion is a portion (69) of the membrane (6) which can be tapped by the screw (1).

12. Anchor as claimed in any one of claims 1 to 10, **characterized in that** the nut-forming portion is a separately mounted part (8) attached to the expansion portion (6, 7).

13. Anchor as claimed in any one of the preceding claims, **characterized in that** the expansion portion (6, 7) and the nut-forming portion (69, 8) are fastened together by crimping.

14. Anchor as claimed in any one of the preceding claims, **characterized in that** it comprises rotation locking means (59; 52) for rotationally locking the anchor body (4) with respect to the wall (40) in a position where the flange (55) bears against the wall (40) or against a part (50) to be fixed to the wall.

15. Anchor as claimed in any one of the preceding claims, **characterized in that** the anchor body (4) comprises a piercing element (9; 91) at its opposite end from the flange (55).

16. Anchor as claimed in claim 15, **characterized in that** the anchor comprises fastening means (12) between the screw (1) and the anchor body (4) which are detachable for a torque (C), applied between the screw and the anchor body, greater than or equal to a predetermined torque (C₀).

17. Use of an anchor (10) as claimed in any one of the preceding claims for fixing in a thin wall (40), in particular a construction panel, such as a plasterboard, a cement board, a chipboard, a wooden panel, a hollow clay block, a composite panel formed by assembly of a plasterboard and an insulating panel made of expanded polystyrene or polyurethane foam.

18. Use of an anchor (10) as claimed in any one of claims 1 to 16 for fixing in a plasterboard having a volumetric core density less than 650 kg/m³, preferably less than 550 kg/m³.

19. Assembly comprising a plasterboard (40) having a volumetric core density less than 650 kg/m³, preferably less than 550 kg/m³, and an anchor (10) as claimed in any one of claims 1 to 16, which is fixed or intended to be fixed in the plasterboard (40).
